(19) Europäisches Patentamt
European Patent Office
Office européen des brevets

(11) **EP 3 061 591 A1**

(12) **EUROPEAN PATENT APPLICATION**
published in accordance with Art. 153(4) EPC

(43) Date of publication:
   **31.08.2016 Bulletin 2016/35**

(51) Int Cl.:
   **B29C 59/02** (2006.01)     **B65D 1/02** (2006.01)
   **B65D 23/06** (2006.01)     **B65D 47/40** (2006.01)

(21) Application number: **14856620.1**

(22) Date of filing: **07.10.2014**

(86) International application number:
   **PCT/JP2014/076765**

(87) International publication number:
   **WO 2015/060118 (30.04.2015 Gazette 2015/17)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **24.10.2013 JP 2013220998**

(71) Applicant: **Toyo Seikan Group Holdings, Ltd.**
   **Shinagawa-ku**
   **Tokyo 141-8627 (JP)**

(72) Inventors:
   • **IWASAKI, Tsutomu**
    **Yokohama-shi**
    **Kanagawa 240-0062 (JP)**

   • **AOYA, Masaki**
    **Yokohama-shi**
    **Kanagawa 240-0062 (JP)**
   • **KIMURA, Satoo**
    **Yokohama-shi**
    **Kanagawa 240-0062 (JP)**

(74) Representative: **Raynor, Stuart Andrew**
   **J A Kemp**
   **14 South Square**
   **Gray's Inn**
   **London WC1R 5JJ (GB)**

(54) **PLASTIC MOLDING WITH IRREGULAR SURFACE**

(57)   A plastic formed body having a rugged surface formed by a transfer method, the rugged surface comprising a primary ruggedness and a fine secondary ruggedness that is formed in at least a portion of the primary ruggedness. The rugged surface of the plastic formed body sustains excellent sliding property for various kinds of liquids and yet it can be easily formed.

Fig. 3

EP 3 061 591 A1

**Description**

Technical Field:

This invention relates to a plastic formed body having a rugged surface formed by a transfer method and, more specifically, to a method of producing the same as well.

Plastic materials, in general, can be formed more easily than the glasses or metals, can be easily formed into various shapes, and, therefore, have been used in a variety of applications. Among such applications, the plastic materials are representatively used in a field of packages such as bottles and containers as well as caps fitted to them.

Here, if a liquid is contained in the container, there inevitably occurs a problem of liquid dripping. Therefore, a contrivance is necessary so that when the liquid contained in the container is to be poured out from the mouth portion, the liquid being poured out does not drip to the exterior creeping along the outer wall surface of the container mouth portion.

The same also holds for the caps. Namely, the caps, in many cases, remain attached to the containers that contain liquids such as beverages, seasoning liquids and the like, and the liquids are poured out with the caps being attached thereto. In the caps of this type, a pull-ring is attached to the top plate of the caps. Upon pulling out the pull-ring, there is formed an opening for pouring out the liquid content; i.e., the liquid content is allowed to be poured out through the opening. Here, a pouring cylinder is formed surrounding the opening so that the liquid content being poured out will not flow down creeping round the opening. The liquid content is poured out from the container through the opening, flows along the inner surface of the pouring cylinder, and is drained to the exterior from the tip thereof. That is, the caps of this kind must be so contrived as to prevent the liquid from dripping at the end of the pouring cylinder.

Various means have been proposed to prevent the dripping of liquid, and many of them are to provide a water-repellent film on the inner and outer surfaces of the container mouth portion. For instance, a patent document 1 is proposing an art of providing a film of tin oxide or titanium oxide on the mouth portion of the container while a patent document 2 is proposing an art of providing a film of baked silicone oil on the mouth portion of the container.

Further, a patent document 3 is proposing an art of forming many very fine grooves in a pouring cylinder of the cap, the fine grooves extending in the direction in which the liquid flows to prevent the liquid from dripping.

The arts of forming the water-repellent film on the container mouth portion of the patent documents 1 and 2 are effective in preventing the dripping of liquid. However, the container mouth portion must be coated with the film of a special material arousing a problem of an increase in the cost and requiring cumbersome work for forming the film. In particular, if a screw thread for fitting a cap is formed on the outer circumferential surface of the container mouth portion, a portion near the upper end of the container mouth portion becomes rugged due to the screw thread that is extending to nearly the upper end of the container mouth portion. This makes it further difficult form the film and, besides, causes dispersion in the thickness of the film.

The art of forming many very fine grooves (i.e., rugged surface) in the pouring cylinder of the cap of the patent document 3 may be the most desirable means since it theoretically enhances liquid-repellent property very much. That is, if a liquid flows on the rugged surface, the state of contact between the rugged surface and the liquid becomes solid-liquid contact and gas-liquid contact. Besides, the gas (air) is a substance having the greatest hydrophobic property. Therefore, upon suitably setting the density of ruggedness, very high liquid-repellent property (liquid-dispelling property) is expressed and the liquid can be effectively prevented from dripping.

Despite the rugged surface is formed, however, high liquid-dispelling property is not obtained for all liquids; i.e., liquid-dispelling property varies to a considerable degree depending on the liquids.

According to the study by the present inventors, for example, the liquid-repellent property is the greatest for water, and becomes smaller for soy sauce than for water, and further smaller for sauce than for soy sauce. That is, the surface of a polypropylene (PP) film is formed rugged to a predetermined degree, a liquid droplet is placed on the rugged surface, the PP film is tilted, and a tilt angle $\alpha$ (i.e., sliding angle) at which the liquid droplet starts flowing down on the rugged surface is measured. Namely, though also dependent on the degree of density of the rugged surface, the sliding angle is smaller than about 10 degrees for water, is 15 to 20 degrees for the soy sauce, and is about 40 degrees for the Worcester sauce.

There, further, remains a problem of short duration of water repellency. For instance, if the sliding test is repeated at the above sliding angle $\alpha$, water continues to slide down steadily up to about 50 times, but the soy sauce and Worcester sauce cease to slide down after about 10 times.

As described above, despite the surface is formed rugged, high liquid repellency is not stably expressed for extended periods of time.

Further, a patent document 4 is proposing a water-repellent highly brilliant transparent material forming a first ruggedness of protuberances (or V-grooves) of a triangular shape in cross section and a second ruggedness on the inside of the first ruggedness and finer than the first ruggedness.

Namely, the patent document 4 is expressing excellent water repellency by forming ruggedness of a hierarchical structure. Here, the first ruggedness is for improving the brilliancy. No detailed study has been made for expressing the water repellency, but experiment has been simply conducted concerning the sliding angle for water. There has been described that the fractal structure has abrasion resistance and even if the second fine ruggedness is worn out and is extinguished, water repellency is maintained by the first ruggedness. However, there is no description to what extent the rolling angle $\alpha$ can be sustained if the liquid is flown down repetitively.

Besides, the second ruggedness on the first ruggedness is formed by a thin film of a water-repellent resin such as fluorine-contained resin in which inorganic particles such as of silica are dispersed. Therefore, its production is very cumbersome and the productivity is poor.

Prior Art Documents:

Patent Documents:

Patent document 1: JP-A-2001-97384
Patent document 2: JP-A-9-193937
Patent document 3: JP-A-2009-113831
Patent document 4: JP-A-2003-1736

Outline of the Invention:

Problems that the Invention is to Solve:

It is, therefore, an object of the present invention to provide a plastic formed body having a sliding surface that sustains excellent sliding property for various kinds of liquids and that can be easily formed, and a method of producing the same.

Means for Solving the Problems:

According to the present invention, there is provided a plastic formed body having a rugged surface formed by a transfer method, the rugged surface comprising a primary ruggedness and a fine ciliary secondary ruggedness that is formed in at least a portion of the primary ruggedness.
In the plastic formed body of the invention, it is desired that:

(1) If a short wave cut-off value is $\lambda s \leqq 500$ nm and a long wave cut-off value is $\lambda c \leqq 20$ $\mu$m, the secondary ruggedness has an arithmetic mean roughness Ra in a range of 5 nm to 6 $\mu$ m, and a primary ruggedness ratio $\phi$ s is not less than 0. 05 said primary ruggedness ratio $\phi$s being represented by an area of vertexes of protuberances per a unit area in the primary ruggedness.
Further, the plastic formed body of the invention is preferably used in the embodiments in which:
(2) The plastic formed body assumes the form of a cap or a spout, the cap or the spout having a pouring cylinder that guides the liquid content when it is poured out, and an end of the pouring cylinder is so formed as to assume the rugged surface; and
(3) The plastic formed body assumes the form of a bottle, and an end of the mouth portion of the bottle is so formed as to assume the rugged surface.

According to the present invention, further, there is provided a method of producing a plastic formed body, comprising steps of:

providing a plastic formed body of a predetermined shape and a stamper that has a shaping surface; and
transferring the shape of the shaping surface of the stamper onto a predetermined surface of the plastic formed body by pushing the shaping surface onto the surface of the plastic formed body under a heated condition; wherein the shaping surface of the stamper has a primary ruggedness and a fine secondary ruggedness formed in at least a portion of the primary ruggedness.

Effects of the Invention:

The plastic formed body of the invention has a rugged surface formed by a transfer method, the rugged surface having a so-called hierarchical structure and comprising a primary ruggedness and a fine secondary ruggedness that is formed in at least a portion of the primary ruggedness (and, specifically, on the protruded surfaces of the primary ruggedness).

As will be demonstrated in Examples appearing later, the rugged surface having the hierarchical structure exhibits excellent sliding property for various kinds of liquids and maintains a sliding angle $\alpha$ equivalent to that for water even for the soy sauce and the Worcester sauce. Besides, the sliding property lasts long. For instance, even in case the sliding is repeated by about 30 times by using the soy sauce and the Worcester sauce, the sliding angle $\alpha$ does not almost vary.

Besides, in the invention, the rugged surface is formed by a transfer method of pushing the shaping surface of a stamper (jig for transfer) under a heated condition, and there is no problem of change in the size caused by permanent set. The invention does not employ such means as forming a secondary ruggedness by applying, onto the rugged surface, another material (e.g., fluorine-contained resin, etc.) different from the plastic material forming the plastic surface, i.e., does not form the sliding surface relying on means that is cumbersome and that uses expensive materials. Therefore, the present invention features high productivity and inexpensive production cost.

The plastic formed body of the invention has the sliding surface that is easily formed by an inexpensive method and that maintains excellent sliding property for various kinds of liquids. Therefore, upon forming the sliding surface on, for example, caps, spouts and predetermined portions (from where the liquid content is poured out) of the containers such as bottles and the like, it is made possible to ensure excellent liquid-dispelling property and to effectively prevent the dripping of liquid which is a great problem in the field of packing of this kind.

Brief Description of the Drawings:

[Fig. 1] is a schematic view illustrating contact patterns of a liquid droplet on a rugged surface by using the Cassie-Baxter model and the Wenzel model.
[Fig. 2] is a diagram illustrating the results of energy analysis of liquid droplets.
[Fig. 3] is a view illustrating, on an enlarged scale, a portion of the liquid-repellent surface formed on a plastic formed body of the present invention together with a liquid droplet.
[Fig. 4] is a view illustrating means for forming the liquid-repellent surface.
[Fig. 5] is a side sectional view of a packing body (combination of a bottle and a cap) which is a plastic formed body of the invention.
[Fig. 6] is a side sectional view of a hinged cap which is a plastic formed body of the invention.
[Fig. 7] is a plan view of the hinged cap of Fig. 6.
[Fig. 8] shows SEM photographs (magnifications of 100 times, 500 times, 1000 times and 5000 times) of the secondary rugged surface of a stamper used in Examples.
[Fig. 9] shows plan view images (magnifications of 500 times and 5000 times) and sectional view images (magnifications of 1000 times and 5000 times) as viewed through a SEM of the rugged surface of a plastic formed body (propylene plate) obtained in Example.

Modes for Carrying Out the Invention:

<Principles of sliding property and repeated sliding property on a rugged surface>

First, described below are repellent property, sliding property and repeated sliding property on a surface of a hierarchical structure formed by using a stamper on the surface of a plastic formed body of the present invention.

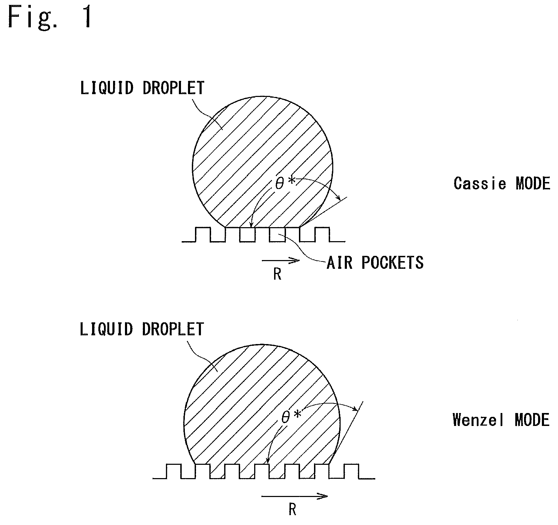

Reference is made to Fig. 1 that illustrates a contact pattern of a liquid droplet on a rugged surface. In the Cassie mode in which the liquid droplet is placed on the rugged surface, dents in the rugged surface serve as air pockets and the liquid droplet is in composite contact with a solid and a gas (air). In this composite contact, the liquid comes in contact with the air having the highest hydrophobic property, and a highly repellent property is exhibited.

Given below is the theoretical formula (1) of a contact angle on the rugged surface in the Cassie mode.

$$\cos \theta^* = (1 - \phi_s) \cos \pi + \phi_s \cos \theta_E$$
$$= \phi_s - 1 + \phi_s \cos \theta_E \qquad (1)$$

$\theta_E$: contact angle,
$\theta^*$: apparent contact angle,
$\phi_s$: area of vertexes of protuberances per a unit area.

As will be understood from the above theoretical formula, the apparent contact angle $\theta^*$ approaches 180 degrees as $\phi_s$ decreases and a super-repellent property is exhibited.

On the other hand, if the liquid droplet enters into the dents in the rugged surface, the liquid droplet is no longer in composite contact but instead comes into contact with the solid only and is represented in the Wenzel mode.

Given below is the theoretical formula (2) of the contact angle on the rugged surface in the Wenzel mode.

$$\cos \theta^* = r \cos \theta_E \qquad (2)$$

$\theta_E$: contact angle,
$\theta^*$: apparent contact angle,
r: ruggedness (= real contact area/projected area of the liquid droplet).

As will be understood from the above theoretical formula, the apparent contact angle $\theta^*$ approaches 180 degrees as r increases and a super-repellent property is exhibited.

As described above, it has been known that the liquid repellency improves in either the Wenzel mode or the Cassie mode. In order to improve the sliding property and the repeated sliding property, however, the present inventors are considering that it would be effective to maintain stable the Cassie mode instead of the Wenzel mode, i.e., to maintain stable the air pockets in the dents. In the Wenzel mode, the interface is large between the liquid phase and the solid phase and, as a result, a large physical and adsorptive force acts on the interface creating a large contact angle and liquid repellency without, however, permitting the liquid droplet to easily slide. In the Cassie mode, the interface is small, the energy barrier is low that must be got over by the liquid droplet when it slides down, and it is considered the liquid droplet easily slides down and many times repetitively.

In order to search the conditions for stably maintaining the Cassie mode, the present inventors have conducted simulation by using the following formula (3) related to the energy of liquid droplet.

$$G/((9\pi)^{1/3} \times V^{2/3} \times \sigma_{LV})$$
$$= (1 - \cos \theta^*)^{2/3} \times (2 + \cos \theta^*)^{1/3} \qquad (3)$$

wherein G is the energy of a liquid droplet placed on a plate,

V is a volume of the liquid droplet,
$\sigma_{LV}$ is a surface tension between the liquid phase and the gas phase, and
$\theta^*$ is an apparent contact angle.

The conditions for simulation were:

rugged pattern: shapes of lines & space,
width of vertex of protuberance: 20 $\mu$m,
depth of rugged pattern: 50 $\mu$m.

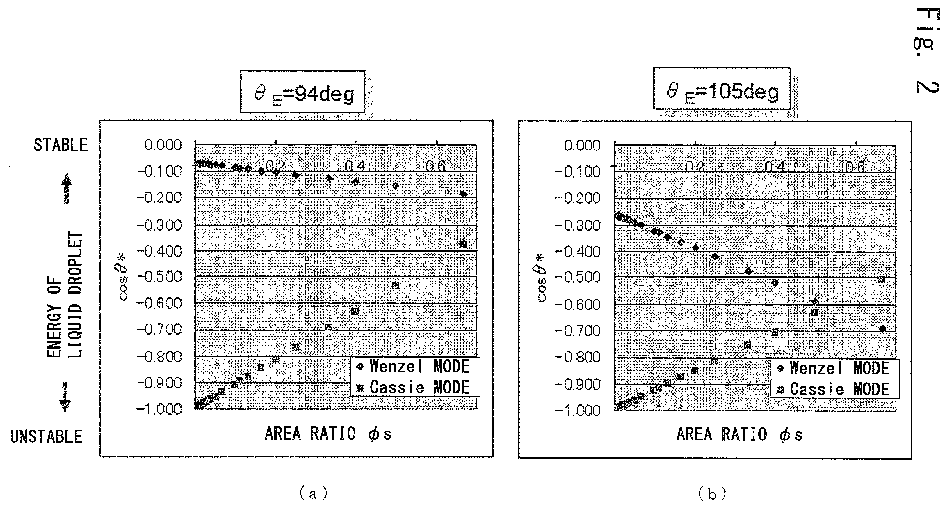

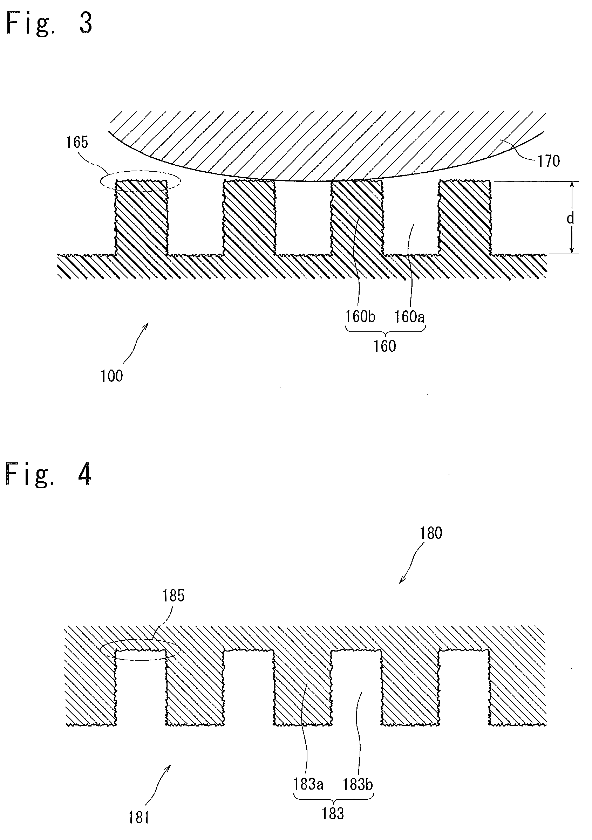

According to the simulation of the above formula (3), as shown in Fig. 2(a), the Wenzel mode at $\theta_E = 94°$ remains stable at all times irrespective of $\phi_s$ (area of vertexes of protuberances per a unit area) that represents the density of ruggedness, and it is considered that the sliding property and repeated sliding property are low on a plastic material surface of this kind. Referring to Fig. 2(b), on the other hand, upon improving the initial contact angle and at $\theta_E = 105°$, the Cassie mode remains stable at all times in a range of $\theta_s \geqq 0.5$, and improvements can be expected in the sliding property and in the repeated sliding property. Namely, referring to Fig. 3 which illustrates a plastic material surface generally designated at 100, the plastic material surface having a primary ruggedness 160 (dents 160a, protuberances 160b) and a fine secondary ruggedness 165 formed on the surfaces of the primary ruggedness, it was presumed that the initial contact angle could be improved due to the effect of the fine secondary ruggedness 165 and that a region could be obtained where the Cassie mode remains stable at all times due to the primary ruggedness 160.

Here, the initial contact angle $\theta_E$ of a commercially available soy sauce to a polypropylene flat plate is $\theta_E = 94°$.

<Rugged surface according to the invention>

The rugged surface of the plastic formed body, according to the present invention is designed based on the above-mentioned theory of sliding.

Namely, in the above-mentioned state, the liquid droplet 170 being placed on the primary ruggedness 160 starts sliding. Dents 160a in the primary ruggedness 160 serve as air pockets (primary air pockets), and the sliding takes place in the above-mentioned Cassie mode to exhibit predetermined liquid repellency. In the sliding based on only the primary ruggedness 160, however, the liquid droplet 170 enters into the dents 160b in the primary ruggedness 160. Therefore, the liquid droplet slides in the above-mentioned Wenzel mode, the primary air pockets extinguish and the interface increases, and an increased physical and adsorptive force acts on the interface causing a decrease in the sliding property and repeated sliding property.

The present invention, on the other hand, has a so-called hierarchical structure forming a fine secondary ruggedness 165 on the primary ruggedness 160, and the liquid droplet 170 is placed on the secondary ruggedness 165. Therefore, air pockets (secondary air pockets) are formed between the liquid droplet 170 and the secondary ruggedness 165, too. Namely, the secondary air pockets between the liquid droplet 170 and the secondary ruggedness 165 prevent the liquid droplet from entering into the dents 160a in the primary ruggedness 160. This effectively prevents the extinction of the air pockets between the primary ruggedness 160 and the liquid droplet 170, stably maintains the state in the Cassie mode, and maintains excellent sliding property. Besides, despite the sliding is repeated, the primary air pockets are stably maintained accounting for an improved repeat sliding property.

In the liquid-repellent surface 100 having the hierarchical structure, the secondary ruggedness 165 should have a surface roughness of a size that prevents the liquid droplet on the secondary ruggedness 165 from entering into the dents 160a in the primary ruggedness 160, and should, for example, have an arithmetic mean roughness Ra (JIS B-0601-1994) in a range of 5 nm to 6 $\mu$m and, specifically, 100 nm to 1 $\mu$m.

Moreover, the primary ruggedness 160 should be the one that exhibits liquid repellency to a sufficient degree in the Cassie mode, and should, for example, have a primary ruggedness ratio $\phi$s as represented by an area of vertexes of protuberances per a unit area in the primary ruggedness of not less than 0.05 and, preferably, not less than 0.1. From the standpoint of formability or mechanical strength, furthermore, it is desired that the primary ruggedness ratio $\phi_s$ is not more than 0.8 and, specifically, not more than 0.5.

It is, further, desired that the depth d in the primary ruggedness 160 is in a range of 5 to 200 $\mu$m and, specifically, 10 to 50 $\mu$m.

There is no specific limitation on the shape of the primary ruggedness 160. From the standpoint of effectively preventing the liquid droplet from entering into the dents 160a in the primary ruggedness 160, however, it is desired that the dents 160a are formed in a rectangular shape.' If the dents 160a are formed in, for example, a V-shape, then the liquid droplet 170 easily enters into the dents 160a.

The secondary ruggedness 165 is most preferably formed on the whole surfaces of the primary ruggedness 160 but should, at least, be formed on the upper ends of the protuberances 160b of the primary ruggedness 160. In the example of Fig. 3, the secondary ruggedness 165 is formed on the whole primary ruggedness 160. In this case, the secondary ruggedness 165 on the portions other than the upper ends of the protuberances 160 works to prevent the liquid droplet 170 from entering into the dents 160a. If, for example, the secondary ruggedness 165 is formed on only the upper ends of the protuberances 160b of the primary ruggedness 160, the liquid droplet 170 may enter into the dents 160a with a slightly increased probability which, however, is free from any problem in practice.

In the plastic formed body of the invention, the liquid-repellent surface 100 must be formed by the transfer method. If the liquid-repellent surface 100 is formed by such working means as etching, then the size varies due to the permanent set, and it may become difficult to obtain sliding property or repeat sliding property as designed. The transfer method, on the other hand, is free from the problem of permanent set and makes it possible to effectively avoid a change in the sliding property or repeated sliding property caused by the dimensional change.

Further, means for forming the secondary ruggedness 165 by forming a film by applying another material is accompanied by such problems as an increased cost, cumbersome work for forming the film and a decrease in the productivity. There still remains a problem of peeling of film. According to the transfer method that uses no other material than the plastic material forming the surfaces, there is no problem in regard to the cost. Besides, work is easy, high productivity is attained and, moreover, there is no problem such as peeling of film.

The liquid-repellent surface 100 is formed by the transfer method by using, for example, a stamper shown in Fig. 4.

Referring to Fig. 4, the stamper 180 made of a metal such as nickel or the like has a shaping surface 181 for forming the rugged surface mentioned above. The shaping surface 181 has a rugged surface 183 (protuberances 183a, dents 183b) that corresponds to the primary ruggedness 160. On the rugged surface 183, there is formed a fine secondary ruggedness 185 due to micro cracks and chippings generated by a blast working, the fine secondary ruggedness 185 corresponding to the above-mentioned secondary ruggedness 165.

As will be understood from Fig. 4, the stamper 180 is heated, and the shaping surface 181 is pushed onto the surface that would turn into the liquid-repellent surface 150 of the plastic formed body. On the surface of the plastic formed body, there is formed the primary ruggedness 160 comprising the dents 160a that correspond to the protuberances 183a of the rugged surface 183 and the protuberances 160b that corresponds to the dents 183b as the molten plastic enters therein. In the primary ruggedness 160, further, there is formed the fine ciliary secondary ruggedness 165 as the molten plastic enters into the secondary ruggedness 185 formed in the shaping surface 181 due to micro cracks and is pulled out therefrom.

The transfer method is not limited to the above-mentioned method only but may be an injection-forming method, a hot embossing method, a UV imprint method or a compression-forming method.

The plastic formed body of the present invention may be formed by using any material so far as it has surfaces formed by using a plastic material (e.g., thermoplastic resin, thermosetting resin, photocurable resin or the like) that is capable of forming the liquid-repellent surface 100 mentioned above.

<Forms of the plastic formed body>

Owing to long life and excellent liquid repellency exhibited by the liquid-repellent surface 100, the plastic formed body of the present invention can be used in a variety of forms. Specifically, owing to its excellent liquid-dispelling property, the plastic formed body of the invention can be effectively used as packing bodies for containing beverages, seasoning liquids and various medical fluids.

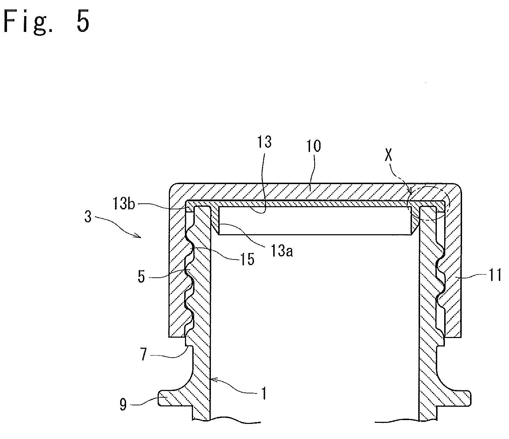

Reference is now made to Fig. 5 which depicts a preferred example of the packing body. Here, the packing body is constituted by a plastic bottle having a mouth portion 1 and a cap (threaded cap) 3 that is fitted to the mouth portion 1. A liquid is contained in the plastic bottle.

In the plastic bottle constituting the packing body, though not diagramed, the lower portion of the mouth portion 1 is continuous to a curved shoulder portion which is continuous to a body portion, and the lower end of the body portion is closed with the bottom portion.

The plastic bottle has a screw thread 5 formed on the outer surface thereof for holding the cap 3, has an annular protuberance 7 formed on the lower side of the screw thread 5, and has a support ring 9 formed on the lower side of the annular protuberance 7 and by which the bottle can be held at the time of transit.

The cap 3, on the other hand, has a top plate 10 and a cylindrical side wall 11 descending from the circumferential edge of the top plate 10. On the inner surface (specifically, on a circumferential edge portion) of the top plate 10, there is formed a liner 13 for sealing. On the inner surface of the cylindrical side wall 11, there is formed a screw thread 15 that engages with the screw thread 5 on the mouth portion 1 of the bottle.

That is, the cap 3 is fitted to the mouth portion 1 relying on the engagement of screw threads. With the cap 3 being fitted, the upper part of the mouth portion 1 comes into close contact with the liner 13 so that the interior of the bottle is hermetically sealed.

To ensure the hermetic sealing, furthermore, the liner 13 has a relatively long inner ring 13a and a relatively short outer ring 13b. The upper end of the mouth portion 1 enters into space between them. The inner side surface of the upper end of the mouth portion 1, the upper end surface thereof and the upper end of the outer side surface thereof, come in close contact with the liner 13 to ensure the sealing.

Though not shown in Fig. 5, the cap 3 is, usually, provided with a tamper-evidence band (TE band) via a weakened line that can be broken at the lower end of the cylindrical side wall 11. As the cap 3 is opened and removed from the mouth portion 1, the TE band separates away from the cap 3. For the customers, in general, this could prove that the cap 3 was once opened and, therefore, could work to prevent unauthorized use.

With the above packing body, the cap 3 is removed from the mouth portion 1 of the bottle and, thereafter, the bottle is tilted so that the liquid contained in the bottle can be poured out through the mouth portion 1. It will, therefore, be learned that the pouring port of the packing body to which the cap 3 (threaded cap) is fitted becomes an upper end surface X of the mouth portion 1 of the bottle.

That is, if the plastic formed body of the invention is adapted to the plastic bottle, the above-mentioned rugged surface 100 is formed on the upper end surface (hereinafter often called simply "pouring port") of the mouth portion 1 of the bottle.

In the above example, further, the mouth portion 1 of the bottle is used as the pouring port X. Here, the plastic formed body of the invention can be adapted to the cap, too.

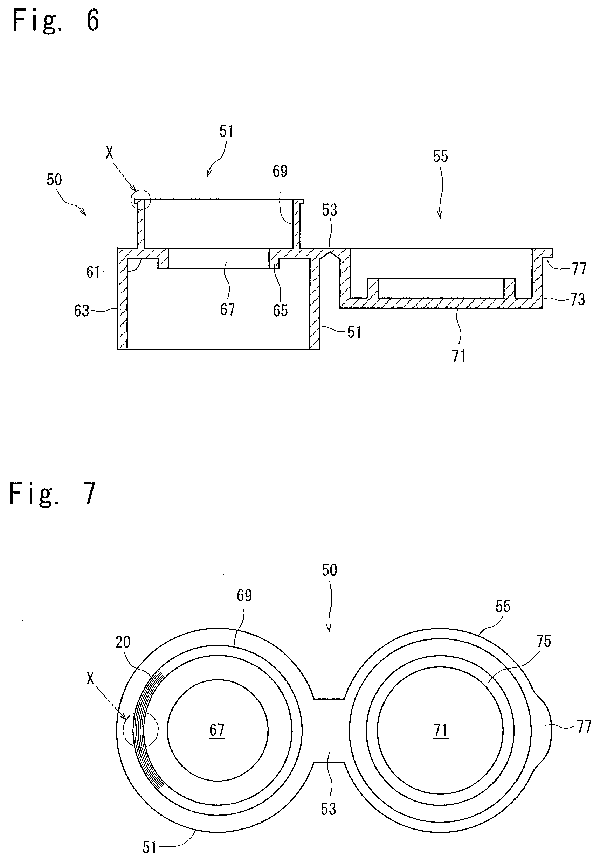

Referring to Figs. 6 and 7, a hinged cap (designated at 50 in the drawings) is used being fitted to the mouth portion 1 of the plastic bottle like the packing body shown in Fig. 5. In the example of Fig. 5, the cap is called threaded cap that is fitted to the mouth portion 1 relying on the engagement of screw threads while the cap 50 used in this example is a so-called hinged cap.

Namely, the cap 50 is constituted by a main cap body 51 that is fixed by being fitted into the mouth portion 1 of the bottle and a hinged lid 55 linked to the main cap body 51 via a hinge band 53.

The main cap body 51 includes a top panel 61 and a cylindrical side wall 63 descending from the circumferential edge portion of the top panel 61. The top panel 61 has on the inner surface thereof an annular protuberance 65 that extends downward maintaining a gap from the cylindrical side wall 63. Namely, by executing the capping operation, the upper part of the bottle mouth portion 1 is fitted into space between the cylindrical side wall 63 and the annular protuberance 65 and whereby the main cap body 1 is firmly fitted ono the bottle mouth portion 1.

Further, an opening 67 is formed in the central portion of the top panel 61 to serve as a flow passage at the time of pouring out the liquid content, and a pouring cylinder 69 is erected on the upper surface of the top panel 61 so as to surround the opening 67.

Usually, from when the packing body is produced until when it is sold and put to use, the opening 67 remains closed. At the time when a customer tries to pour the liquid content out of the bottle for the first time, the wall of this portion is torn away and the opening 67 is formed.

On the other hand, the hinged lid 55 includes a top plate 71 and a skirt portion 73 extending from the circumferential edge of the top plate 71. An end of the skirt portion 73 is linked to a hinged band 53 which is linked to the upper end of the cylindrical side wall 63 of the main cap body 1. The hinged lid 55 is opened and closed as it swings with the hinged band 53 as a fulcrum.

A seal ring 75 is formed in the inner surface (upper surface in Fig. 7) of the top plate 71 of the hinged lid 55, and a flange 77 for opening is formed at an end of the top plate 71 on the side opposite to the hinged band 53.

If the hinged lid 55 is closed, the outer surface of the seal ring 75 comes into close contact with the inner surface of the pouring cylinder 69, whereby the opening 67 that was formed for pouring out the liquid content is maintained sealed.

Further, the flange 77 for opening is for facilitating the turn of the hinged lid 55 so as to be opened and closed.

With the above hinged cap, the hinged lid 55 is opened to pour out the liquid content through the pouring cylinder 69. Therefore, the upper end of the pouring cylinder 69 assumes a form that is slightly flaring outwards.

Further, the upper part of the pouring cylinder 69 and, specifically, a portion located on the side opposite to the hinged band 53, is a portion that serves as the pouring port X. That is, the hinged lid 55 that is opened is present on the side where the hinged band 53 is present, and the liquid content is poured out toward the side opposite to the side where the hinged band 53 is present.

In the hinged cap as will be understood from the foregoing description, the above-mentioned liquid-repellent surface 100 is formed on a portion that becomes at least the pouring port X at the upper end of the pouring cylinder 69.

The liquid-repellent surface 100 may extend downward on the inner surface of the pouring cylinder 69. Preferably, however, the liquid-repellent surface 100 should not extend up to the portion to where the seal ring 75 of the hinged lid 55 comes in close contact. This is because if the liquid-repellent surface 100 is extending up to this portion, then the sealing ability may decrease.

In Figs. 6 and 7, the hinged lid 55 is used as a member for maintaining the sealing after the opening 67 is formed. The cap, however, may be formed in a structure that uses a threaded lid in place of the hinged lid 55. That is, the threaded lid is detachably fitted onto the main cap body 1 relying on the engagement of screw threads. In this case, the whole circumference at the upper end of the pouring cylinder 69 becomes the pouring port X and, therefore, the liquid-repellent surface 100 is formed on the whole circumference thereof.

In the above-mentioned embodiment, there is no particular limitation on the plastic material for forming plastic bottles having mouth portion 1, and there can be used any thermoplastic resins, i.e., olefin resins such as polyethylene and polypropylene, and polyester resins as represented by polyethylene terephthalate (PET) that has heretofore been used for forming plastic bottles. Specifically, it is most desired to use the polyester resin from the standpoint of forming the liquid-repellent surface 100 which is a rugged surface on the upper end surface of the bottle mouth portion 1 so that the upper end surface can be used as the pouring port X and of attaining stability and strength of the rugged surface 100.

Here, if the cap side serves as the pouring port X and the rugged surface 100 is formed thereon, then the bottle may be made of a glass or a metal.

There is no particular limitation on the plastic material forming the caps 3 and 50, either, and any of various kinds of thermoplastic resins, i.e., such olefin resins as polyethylene and polypropylene can be used like those for forming known plastic caps.

Further, if the bottle serves as the pouring port X and on which the liquid-repellent surface 100 is formed, the cap may be a metallic threaded cap.

Further, a liner material 13 provided on the cap 3, too, is made from a known elastic material, i.e., a thermoplastic elastomer such as ethylene-propylene copolymer elastomer or styrene elastomer.

Figs. 5 to 7 have illustrated the example of adapting the plastic formed body of the present invention to the bottle and the cap. However, the invention is in no way limited thereto only but can also be adapted to a spout that is fitted to, for example, a bag-like container and is used as a pouring fitting. Further, to form the liquid-repellent surface 100 on the bottles and caps, the bottles and caps may be formed by predetermined forming means, and the liquid-repellent surface 100 may be transferred onto the predetermined portions thereof by using the stamper mentioned above.

The ruggedness may assume any form on the liquid-repellent surface 100 so far as a liquid is allowed to flow on the ruggedness.

EXAMPLES

Excellent properties of the invention will now be described below by way of Examples.

(Examples 1 to 3)

Nickel was electroformed on an epoxy resin master formed through the step of an ordinary photolithography to obtain a stamper that as a line-and-space type primary ruggedness formed thereon, the width of vertex of protuberances being 20 $\mu$m, the pitch among them being 100 $\mu$m, and the height of protuberances being 30 $\mu$s (area ratio $\phi_s$ = 0.2) relative to the shaping surface thereof.

An alumina powder having an average grain size of 1.2 $\mu$m was shot-blasted as a medium onto the shaping surface. A secondary ruggedness caused by the ensuing micro cracks and chipping was engraved in the whole surfaces of the primary ruggedness.

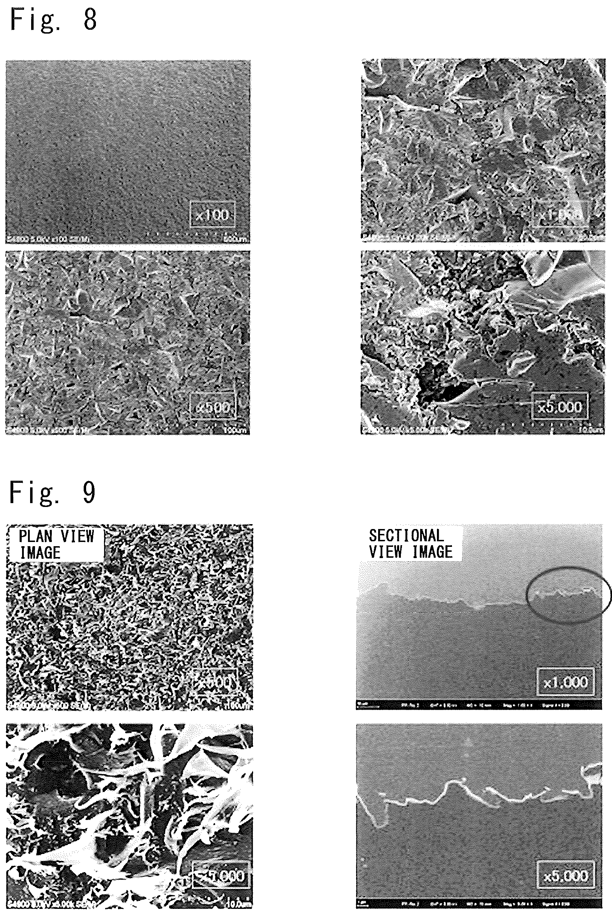

Fig. 8 shows microphotographs (magnifications of 100 times, 500 times, 1000 times and 5000 times) of the secondary rugged surface of the stamper obtained above.

A black coating material of silicone resin was applied onto the back surface of the stamper, the back surface was irradiated with a halogen lamp, and the stamper was heated up to a temperature of 250°C.

On the other hand, the polypropylene resin (Prime Polymer J246M) was injection-formed into a plate of 58 mm high, 58 mm wide and 3 mm thick. The stamper that was heated was pushed onto the surface of the plate, and the shape formed on the shaping surface of the stamper was transferred thereto.

Next, a cooling plate of aluminum was pushed onto the back surface of the stamper to cool the stamper down to a temperature of 30°C. Thereafter, the plate was parted from the stamper.

Fig. 9 shows plan view images (magnifications of 500 times and 5000 times) and sectional view images (magnifications of 1000 times and 5000 times) as viewed through a microscope of the rugged surface formed by being transferred onto the plate.

By using a white color interferometer (New View 7300 manufactured by ZYGO Co.), the secondary ruggedness was observed under the conditions of an objective lens of 50 times, an eyepiece of 1. 5 times, a long wave cut-off value $\lambda$c of 17.6 $\mu$m and a short wave cut-off value $\lambda$ s of 441 nm to be of a ciliary shape having an arithmetic mean roughness Ra of 11 nm.

The plate forming the rugged surface as described above was evaluated for its sliding property.

Real liquids (pure water, soy sauce, Worcester sauce of medium concentration) were dropped on the plate which was then gradually tilted to measure sliding angles at which the liquid droplets started sliding. The amounts of liquid droplets and the device for measurement were as described below.

Amounts of droplets:

| | |
|---|---|
| Pure water: | 17 mg |
| Say sauce: | 14 mg |
| Worcester sauce of medium concentration: | 16 mg |
| Device: | DropMaster 700 manufactured by Kyowa Kaimen Kagaku Co. |

Next, the above plate was evaluated for its repeat sliding property.

The plate was fixed being tilted at 30°, and the real liquids (pure water, soy sauce, Worcester sauce of medium concentration) were dropped repetitively. The number of times n (n is a natural number) of sliding that could be repeated was regard to be n-1 until when the liquid droplets stuck to the plate and could no longer be slided.

The results of evaluation were as shown in Table 1.

(Comparative Examples 1 to 3)

Stampers were prepared in such manners as forming the primary ruggedness only, forming the secondary ruggedness only, and forming neither of them. By using the stampers, samples were formed and evaluated for their properties.

The primary ruggedness was formed in the same manner as in Example while the secondary ruggedness was formed in the same manner as in Example but shot-blasting an alumina powder having an average grain size of 48 $\mu$m as a medium.

The results of evaluation were as shown in Table 1.

Table 1

| | | | Primary ruggedness | Secondary ruggedness | Sliding angle | Frequency until droplet could not slide(times) | | |
|---|---|---|---|---|---|---|---|---|
| Ex./ Comp. Ex. | No. | Liquid droplet | ○:$\varphi_s \geqq 0.05$ | ○:5nm≦Ra≦6μm | ○: ≦45° | ○:≧30 times | Evaluation | Remarks |
| Ex. | 1 | Soy sauce | ○ $\varphi_{s}$=0.2 | ○ Ra=11nm | ○ 10° | ○ ≧ 30 times | ○ | |
| Comp. Ex. | 1-1 | Soy sauce | ○ $\varphi_{s}$=0.2 | × Ra=3nm | ○ 22° | × 3 times | Δ | |
| Comp. Ex. | 1-2 | Soy sauce | ○ $\varphi_{s}$=0 | ○ Ra=800nm | × ≧90° | - | × | * |
| Comp. Ex. | 1-3 | Soy sauce | ○ $\varphi_{s}$=0 | × Ra=3nm | × ≧ 90° | - | × | * |
| Ex. | 2 | Water | ○ $\varphi_{s}$=0.2 | ○ Ra=11nm | ○ 5° | ○ ≧ 30 times | ○ | |
| Comp. Ex. | 2-1 | Water | ○ $\varphi_{s}$=0.2 | × Ra=3nm | ○ 5° | ○ ≧ 30 times | ○ | |
| Comp. Ex. | 2-2 | Water | ○ $\varphi_{s}$=0 | ○ Ra=800nm | × ≧ 90° | - | × | * |
| Comp. Ex. | 2-3 | Water | ○ $\varphi_{s}$=0 | × Ra=3nm | × ≧ 90° | - | × | * |
| *: Did not fall and could not be measured | | | | | | | | |

Results of evaluation

Table 1 (continued)

| Results of evaluation | | | | | | | | |
|---|---|---|---|---|---|---|---|---|
| Ex./ Comp. Ex. | No. | Liquid droplet | Primary ruggedness | Secondary ruggedness | Sliding angle | Frequency until droplet could not slide(times) | Evaluation | Remarks |
| | | | $\bigcirc$:$\varphi_s \geqq 0.05$ | $\bigcirc$:$5nm \leqq Ra \leqq 6\mu m$ | $\bigcirc$: $\leqq 45°$ | $\bigcirc$: $\geqq 30$ times | | |
| Ex. | 3 | Worcester sauce | $\bigcirc$ $\varphi_{s=}0.2$ | $\bigcirc$ Ra=11nm | $\bigcirc$ 15° | $\bigcirc$ $\geqq 30$ times | $\bigcirc$ | |
| Comp. Ex. | 3-1 | Worcester sauce | $\bigcirc$ $\varphi_{s=}0.2$ | $\times$ Ra=3nm | $\bigcirc$ 25° | $\times$ 1 time | $\Delta$ | |
| Comp. Ex. | 3-2 | Worcester sauce | $\bigcirc$ $\varphi_{s=}0$ | $\bigcirc$ Ra=800nm | $\times$ $\geqq 90°$ | - | $\times$ | * |
| Comp. Ex. | 3-3 | Worcester sauce | $\bigcirc$ $\varphi_{s=}0$ | $\times$ Ra=3nm | $\times$ $\geqq 90°$ | - | $\times$ | * |
| *: Did not fall and could not be measured | | | | | | | | |

Description of Reference Numerals:

100:     liquid-repellent surface
160:     primary ruggedness
160a:    dents
160b:    protuberances
165:     secondary ruggedness
170:     liquid droplet
180:     stamper

**Claims**

1.  A plastic formed body having a rugged surface formed by a transfer method, said rugged surface comprising a primary ruggedness and a fine ciliary secondary ruggedness that is formed in at least a portion of said primary ruggedness.

2.  The plastic formed body according to claim 1, wherein if a short wave cut-off value is $\lambda s \leqq 500$ nm and a long wave cut-off value is $\lambda c \leqq 20$ $\mu$m, the secondary ruggedness has an arithmetic mean roughness Ra in a range of 5 nm to 6 $\mu$m, and a primary ruggedness ratio $\phi s$ is not less than 0.05, said primary ruggedness ratio $\phi s$ being represented by an area of vertexes of protuberances per a unit area in the primary ruggedness.

3.  The plastic formed body according to claim 1, wherein the plastic formed body assumes the form of a cap or a spout, the cap or the spout having a pouring cylinder that guides the liquid content when it is poured out, and an end of the pouring cylinder is so formed as to assume the rugged surface.

4.  The plastic formed body according to claim 1, wherein the plastic formed body assumes the form of a bottle, and an end of the mouth portion of said bottle is so formed as to assume the rugged surface.

5.  A method of producing a plastic formed body, comprising steps of:

    providing a plastic formed body of a predetermined shape and a stamper that has a shaping surface; and
    transferring the shape of said shaping surface of the stamper onto a predetermined surface of the plastic formed body by pushing the shaping surface onto the surface of the plastic formed body under a heated condition; wherein
    the shaping surface of said stamper has a primary ruggedness and a fine secondary ruggedness formed in at least a portion of said primary ruggedness.

# Fig. 1

LIQUID DROPLET

$\theta *$

Cassie MODE

AIR POCKETS

R

LIQUID DROPLET

$\theta *$

Wenzel MODE

R

Fig. 2

Fig. 3

Fig. 4

Fig. 5

Fig. 6

Fig. 7

Fig. 8

Fig. 9

**EP 3 061 591 A1**

## INTERNATIONAL SEARCH REPORT

| International application No. |
|---|
| PCT/JP2014/076765 |

**A. CLASSIFICATION OF SUBJECT MATTER**
*B29C59/02*(2006.01)i, *B65D1/02*(2006.01)i, *B65D23/06*(2006.01)i, *B65D47/40* (2006.01)i

According to International Patent Classification (IPC) or to both national classification and IPC

**B. FIELDS SEARCHED**

Minimum documentation searched (classification system followed by classification symbols)
B29C59/00-59/18, B29C33/00-33/76, B65D1/02, B65D23/06, B65D47/40

Documentation searched other than minimum documentation to the extent that such documents are included in the fields searched
Jitsuyo Shinan Koho          1922-1996  Jitsuyo Shinan Toroku Koho  1996-2014
Kokai Jitsuyo Shinan Koho    1971-2014  Toroku Jitsuyo Shinan Koho  1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 8-72140 A  (Dainippon Printing Co., Ltd.), 19 March 1996 (19.03.1996), paragraphs [0004], [0015] to [0018]; each drawing (Family: none) | 1,2,5 |
| X | JP 8-1770 A  (Dainippon Printing Co., Ltd.), 09 January 1996 (09.01.1996), paragraphs [0006], [0009], [0015], [0020]; each drawing (Family: none) | 1,2,5 |
| A | JP 2003-1736 A  (Toto Ltd.), 08 January 2003 (08.01.2003), entire text (Family: none) | 1-5 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 December 2014 (17.12.14) | 06 January 2015 (06.01.15) |

| Name and mailing address of the ISA/ Japan Patent Office | Authorized officer |
|---|---|
| Facsimile No. | Telephone No. |

Form PCT/ISA/210 (second sheet) (July 2009)

**19**

**INTERNATIONAL SEARCH REPORT**

International application No.

PCT/JP2014/076765

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-41541 A  (Toppan Printing Co., Ltd.), 17 February 2005 (17.02.2005), entire text (Family: none) | 1-5 |
| A | JP 2011-104987 A  (Nissan Motor Co., Ltd.), 02 June 2011 (02.06.2011), entire text & US 2012/0202009 A1    & EP 2492075 A1 & WO 2011/048988 A1    & CN 102574311 A | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001097384 A
- JP 9193937 A
- JP 2009113831 A
- JP 2003001736 A